# EUROPEAN PATENT APPLICATION

(11) **EP 4 717 815 A1**
(43) Date of publication of application: **01.04.2026**
(21) Application number: 25198097.5
(22) Date of filing: 26.08.2025
(51) Int. Cl.: D06N 3/00, C14C 11/00, B29C 59/04, B32B 38/06, B32B 38/10

(54) **METHOD FOR PRODUCING A MULTILAYER LAMINATE PRODUCT AND PLANT FOR IMPLEMENTING SAID METHOD**

(30) Priority: 30.09.2024 IT 202400021564
(71) Applicant: GE.MA.TA. S.p.A., 36070 Trissino (VI) (IT)
(72) Inventor: MAITAN, Gianni, 36070 TRISSINO (VI) (IT)
(74) Representative: Marchioro, Paolo

(57) **Abstract**

A method for producing a multilayer laminar product (6), comprising the operations of arranging a laminar support (1), covering a first face (1a) of the laminar support (1) with a first covering layer (2) in a polymeric resin and consolidating, at least partially, the first covering layer (2).

The method further envisages pushing an embossed surface (107) against the first covering layer (2) with interposition of the laminar element (4) and causing the polymerization of the first covering layer (2).

## Description

The present invention concerns a method for producing a multilayer laminar product particularly suitable for ennobling leathers.

The present invention also relates to a plant for implementing the aforesaid method.

As is known, in the leather processing sector, so-called "ennobling" processes which allow to increase the commercial value of low-choice leather are used.

In fact, one of the first stages of leather processing consists in separating the most valuable outer layer, called "grain" in jargon, from a less valuable lower layer, which in turn is eventually divided into further layers.

In the following, the term "leather" will mean not only a leather in its entirety, but also and above all any of the layers obtained from it, in particular the less valuable ones.

Basically, an ennobling process of known type provides for covering the surface of the leather intended to be visible in use with a layer of plastic material, generally polyurethane or acrylic. The aforesaid layer allows to cover the superficial defects of the leather and to give it an appearance similar to that of a more valuable leather.

A similar process can also be used to give a fabric, synthetic or otherwise, a leather-like appearance, in which case we speak of "imitation leather". Obviously, what will be described below is also fully applicable to the latter process.

Generally, during the ennobling process an embossing is also printed on the surface of the product, in order to achieve special aesthetic effects that contribute to increasing the value of the product.

A technique of known type suitable for ennobling leathers, described in Italian patent application no. VI2005A000080 on behalf of the Applicant of the present invention, envisages covering a laminar support, for example a leather to be ennobled, with a layer of polyurethane resin.

Subsequently, an embossed paper is compressed against the layer of polyurethane resin not completely polymerized and, therefore, still having a soft consistency, to imprint the pattern of the embossed paper on said layer.

The technique then envisages polymerizing the polyurethane resin so as to make it adhere stably to the laminar support.

After the resin has been polymerized, the embossed paper is removed from the laminar support so as to obtain the final product.

To facilitate the removal of the embossed paper and prevent it from adhering to the polyurethane resin, the embossed paper is previously covered with a protective film, also made of polyurethane, which prevents direct contact between the polyurethane resin and the embossed paper itself. This film becomes an integral part of the polyurethane resin during the polymerization described above.

The aforesaid known technique has some recognized drawbacks.

A first drawback derives from the fact that the width of the plant, and therefore the width of the treatable leather, is conditioned by the width of the embossed paper commercially available, which usually does not exceed 2000 mm.

This aspect is limiting, considering that some leathers reach up to 3500 mm and more in width.

In order to use the technique described above with such wide leathers, it is necessary to cut the latter according to their longitudinal direction so as to obtain strips of width less than the width of the paper, which are processed one after the other.

The aforesaid known technique has the further disadvantage that the embossed papers available on the market are not provided with the protective film, which therefore must be made in the same leather ennobling plant. In ennobling plants of the known type, the film is made by applying a thin layer of polyurethane resin to the embossed paper, for example by spreading with a blade, spreading with a cylinder, spraying with guns, etc. The resin is then made to solidify in the furnace to obtain the film.

It is understood that the aforesaid operation has the disadvantage of affecting the cost of the process and the overall size of the plant.

A further drawback of the prior art described above is related to the cost of the embossed paper, accentuated by the fact that the latter must have an adequate pulp and grammage to withstand the mechanical, chemical and thermal stresses produced during processing. Evidently, the cost of the embossed paper affects the cost of the manufacturing process.

To limit the costs related to the embossed paper, downstream of the polymerization process there is a device that removes the portion of film left on the embossed paper so that it can be reused. However, the aforesaid device contributes to the increase in the overall size and costs of the plant, as well as in the costs of the process.

A further drawback of the above-described technique derives from the fact that the embossed paper requires periodic replacement, contributing to further increasing the costs of the process.

The present invention aims to overcome all the above-mentioned drawbacks inherent in the ennobling technique of known type described above and the related plants.

In particular, it is an object of the present invention to realize a method for producing a multilayer laminar product, in particular of ennobled leathers, which allows the processing of products with widths greater than those allowed by the prior art described above.

It is also an object of the present invention to propose a method for producing a multilayer laminar product, the implementation of which is less expensive than analogous methods belonging to the prior art.

In particular, it is an object of the present invention to avoid the use of embossed paper.

This object also allows to obtain plants for the implementation of the aforesaid method less complex and therefore less expensive and more reliable than plants for the implementation of the methods belonging to the known art.

Another object achieved by the invention is to propose a production method that allows to obtain a more stable and resistant final product.

Not least object of the invention is to propose a production method that allows to realize more compact production plants compared to plants of known type. The above objects are achieved by a method for producing a multilayer laminar product, in particular an ennobled leather, in accordance with claim 1.

The aforesaid objects are also achieved by a plant for producing the aforesaid multilayer laminar product according to claim 8.

Further detailed features of the invention are given in the dependent claims.

Advantageously, the technique of the invention makes it possible to process high-width leathers.

This advantageously makes it possible to obtain products intended for fields of application outside the scope of the products obtained by the known technique. In addition, advantageously, the possibility of processing the leathers without cutting them avoids producing waste of raw material.

Therefore, it is understood that the technique of the invention is particularly suited to the processing of valuable leathers of considerable sizes.

Still advantageously, the fact of not using embossed paper allows reducing the costs related to the latter.

In particular, the absence of procedures and devices to deposit the protective film on the embossed paper and to remove it allows to reduce the costs and footprint of the plant, as well as the costs of processing.

The aforesaid objects and advantages, together with the other ones to be mentioned hereinafter, will be highlighted during the following description of a preferred embodiment of the invention which is given, by way of non-limiting example, with reference to the attached drawings, where:
- fig. 1 includes figs. 1(a)-1(g) which schematically represent different steps of the method of the invention according to a first preferred embodiment, in the application to a laminar support;
- fig. 2 includes figs. 2(a)-2(i) which schematically represent different steps of the method of the invention according to a second preferred embodiment, in the application to a laminar support;
- fig. 3 represents the plant of the invention, in side view, according to the aforesaid first preferred embodiment;
- fig. 4 represents a detail of a first embodiment variant of the plant of fig. 3;
- fig. 5 represents the plant of the invention, in side view, according to the aforesaid second preferred embodiment.

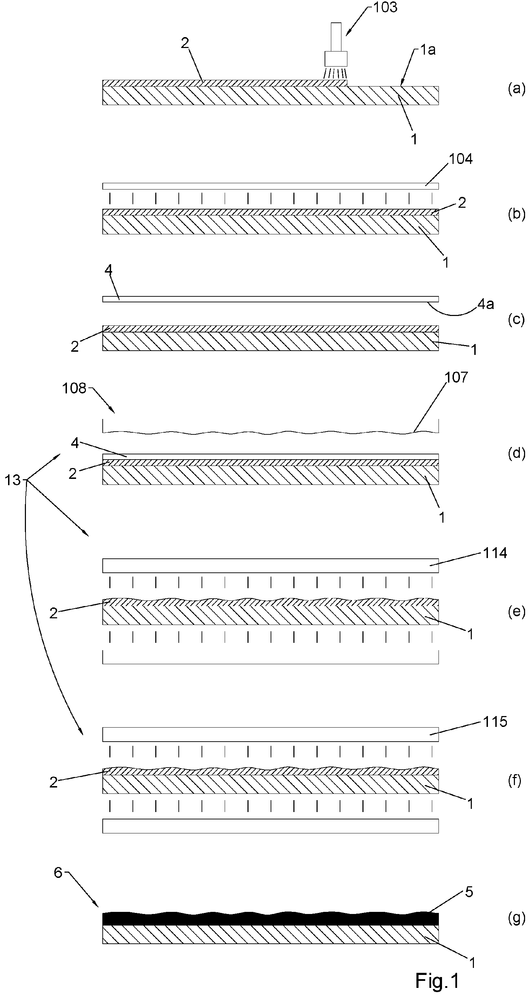

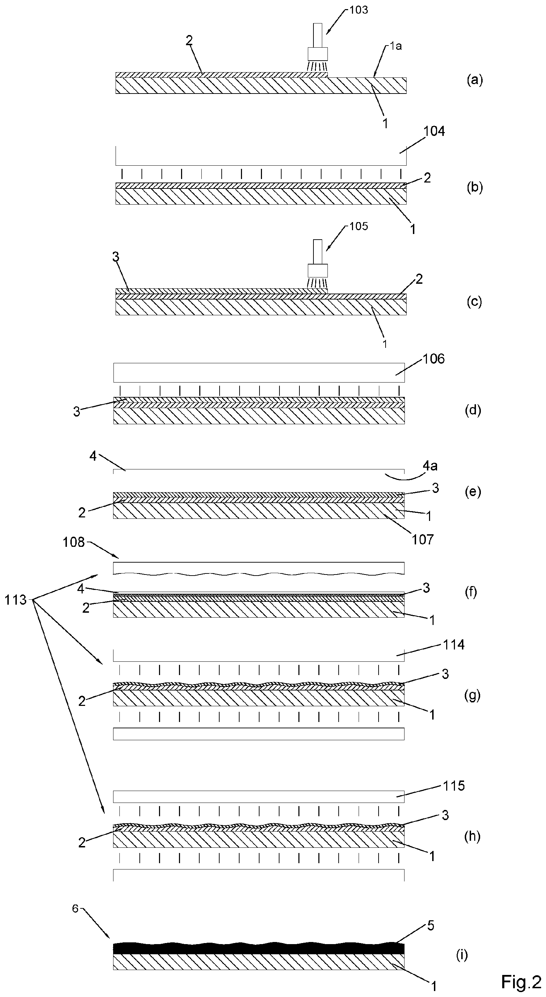

The method of the invention for producing a multilayer laminar product, indicated below with **6,** particularly suitable for the ennobling of leathers, provides for the arrangement of a laminar support indicated in fig. 1 and in fig. 2 with **1.**

Preferably, the laminar support **1** is a leather, but the method of the invention can also be applied to other laminar supports, in particular to fabrics, synthetic or otherwise.

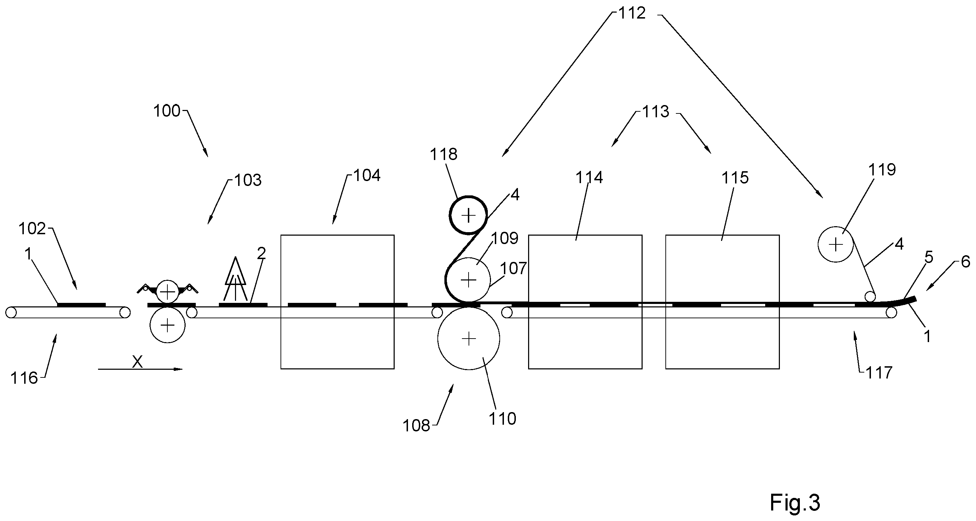

Preferably but not necessarily, the laminar support **1** is advanced in a plant **100,** represented according to the preferred embodiment in fig. 3, according to an advancement direction **X** at a predetermined advancement speed by a first feed device **102.** Preferably, the aforesaid first feed device **102** comprises a flexible element closed in a loop around a series of cylinders, on which the laminar support **1** is rested and which is advanced according to the aforesaid advancement direction **X.**

With regard to the advancement speed, it is preferably but not necessarily comprised in the range between 5 and 20 metres per minute, even more preferably between 8 and 14 metres per minute.

As can be seen in fig. 1(a), according to a first preferred embodiment of the method of the invention, a first face **1a** of the laminar support **1** is covered with a first covering layer **2** in a polymeric resin, preferably but not necessarily comprising water-based or solvent-based polyurethane.

Such polymeric resin could alternatively be an epoxy or acrylic polymeric resin or mixtures of acrylic, polyurethane or epoxy resins.

Therefore, in the following discussion, when indicating the polyurethane nature of the resin, it is to be understood that alternatively such resin may be an acrylic resin.

In addition, such resins could comprise additives in aqueous dispersion. Still preferably, such polymeric resin comprises pigments.

The first covering layer **2** in polymeric resin is deposited on the laminar support **1,** preferably by spraying or by spreading with a blade or a cylinder with synchronous or reverse function on the first face **1a**, by means of a first applicator assembly **103** belonging to the plant **100.** The first applicator assembly **103** may comprise a series of spray nozzles arranged in a circle, which are rotated around the axis of the circle so as to intersect in succession the trajectory of the laminar support 1, or which are moved with reciprocal motion and transversely to the trajectory of the laminar support **1.** Alternatively or in combination with the aforesaid spray nozzles, the first applicator assembly **103** may comprise a doctor blade or a roller spreading machine for spreading the polymeric resin on the first face **1a**.

Preferably, the amount of such resin of the first covering layer **2** is comprised between 2 and 20 grams per square foot, more preferably such amount is comprised between 7 and 12 grams per square foot.

It should be noted that the unit of measurement grams per square foot was deliberately used in describing the amount of resin spread on the laminar support, even if this unit of measurement does not belong to the international system of units of measurement. Such choice is due to the fact that, for all intents and purposes, operators in the sector use this unit of measurement to define the aforesaid amount of resin. In any case, as known, it is wished to remind that a square foot corresponds to 929.03 cm². Therefore, if necessary, this amount of resin could also be expressed with the unit of measurement grams per cm², making the appropriate transformation of the above indicated values in grams per square foot into the respective values expressed in grams per cm².

As seen in fig. 1(b), the method of the invention, after the operation of covering the first face **1a** of the laminar support **1** with said first covering layer **2** in a polymeric resin, provides for consolidating said first covering layer **2,** for example causing a slight polymerization, so as to give it a more compact, gel-like consistency, so as to obtain a consolidated covering layer. Preferably, the partial consolidation takes place by drying with a first drying assembly **104,** for example a battery of infrared lamps or a ventilated dryer with diathermic oil, steam or gas heating.

Preferably, this step of partial consolidation of the first covering layer **2** by heating takes place at a temperature comprised between 35 °C and 100 °C, even more preferably between 45 °C and 70 °C.

In addition, this partial consolidation step provides for reducing the amount of water or solvent per square foot of the first covering layer **2** downstream of the first drying assembly **104** by a percentage comprised between 40% and 95%, preferably between 60% and 80%, with respect to the weight per square foot of said first covering layer **2** upstream of the first drying assembly **104.**

In order to verify the exact value of the reduction of the amount of water or solvent of the first covering layer **2,** without being affected by the loss of the amount of water of the first laminar support **1,** which normally has a variable humidity depending on the environmental humidity, it is necessary to:
- weigh two pieces of a square foot each of the aforesaid laminar support **1,** in order to define a tare weight;
- apply the covering layer **2** on one of the two pieces of square foot of the aforesaid laminar support **1;**
- weigh upstream of the first drying assembly **104** the square foot of the same laminar support **1** on which the first covering layer **2** is applied by means of the aforesaid first applicator assembly **103** and subtract the tare value from the latter;
- weigh downstream of the first drying assembly **104,** i.e. after the partial consolidation step, the square foot of the same laminar support **1** on which the first covering layer **2** is applied and subtract from the latter value the weight value of the other piece of square foot of the laminar support **1** to which the covering layer **2** has not been applied after the latter has also been passed through the drying assembly **104;**
- compare the two weight values relative to the laminar support **1** on which the covering layer **2** has been applied, upstream and downstream of the heater and without the relative tare weight, to verify the weight reduction in percentage of the second weight value compared to the first value;
- knowing the chemical composition of the first covering layer **2** and the specific weights of the individual components that make up this first covering layer **2,** determine the percentage reduction in the amount of water or solvent of the first covering layer **2.**

According to the preferred embodiment of the invention, the method provides for arranging above the first covering layer **2** a laminar element **4** provided with a first face **4a,** as indicated in fig. 1(c), so that said laminar element **4** is interposed between said first covering layer **2** and an embossed surface **107,** during the subsequent pressing step of the method of the invention.

With regard to the laminar element **4,** it must have sufficient yieldability to be able to transfer the embossing from the embossed surface **107** to the first covering layer **2.** The property just mentioned is obtainable by choosing a material resistant enough to allow a very reduced thickness for the laminar element **4** and, at the same time, having a mechanical and thermal resistance compatible with the use in the aforesaid process.

It has been found that materials particularly suitable to be used as a laminar element are deformable plastic materials, such as polyethylene, nylon, polyester and other equivalent materials, which have a relatively low cost and adequate mechanical and thermal resistance even with very reduced thicknesses, for example comprised between 5 µm and 50 µm, even more preferably between 8 µm and 25 µm, specifically with thickness between 9 µm and 18 µm. It is also evident that, in embodiment variants of the invention, the laminar element **4** can be made of any other material, provided that it has the properties mentioned above.

It is clear that, since the embossed surface **107** is distinct from the laminar element **4,** the latter does not have the same width constraints as the embossed papers available on the market.

In particular, since the embossing is imprinted on the first covering layer **2** by the embossed surface **107,** while the laminar element **4** is used only and exclusively to avoid contact between the embossed surface **107** and the polymeric resin, it is very advantageous to use a laminar element **4** with a smooth surface.

In fact, a smooth laminar element can be selected from a wide range of commercially available materials, including polyethylene or nylon or smooth polyester.

This also allows choosing the laminar element **4,** so as to minimize costs and/or maximize the quality of the multilayer product.

Furthermore, given the nature of the material of the laminar element **4** preferably used in the ennobling process subject-matter of the invention, given the thickness of the same laminar element **4** and the fact that its surface is a smooth surface, it is not necessary to apply on this surface, adapted to be placed in contact with the first covering layer **2** during the embossing operation, a polyurethane covering film, as instead required by the prior art. Therefore, according to the invention, said laminar element **4** is interposed between the first covering layer **2** and the embossed surface **107,** free of any type of covering film. In other words, said surface of the laminar element **4** does not undergo any covering treatment with said protective film, before the embossing operation is carried out.

Consequently, at the end of the ennobling process, cleaning said laminar element **4** from the residues remaining thereon of the aforesaid protective film is no longer necessary. Advantageously, therefore, thanks to the characteristics of the laminar element **4,** used according to the invention, the ennobling process proposed on the one hand allows to obtain an optimal ennobling result, and on the other hand allows to reduce the execution times of this process and the costs due to the use of embossed paper, as instead described above for the known art, and in particular it also allows to process whole leathers of a width of 3400 mm or greater.

Preferably, the plant **100,** configured to allow the execution of this preferred embodiment of the method of the invention, provides that the laminar element **4** is supplied in the form of a strip and is advanced in the advancement direction **X** at a speed corresponding to the aforesaid advancement speed by a second feed device **112.**

Preferably, the second feed device **112** comprises a series of rollers that hold the laminar element **4** in tension and guide it according to a predefined trajectory, so as to bring it into contact with the laminar support **1.**

Even more specifically, said second feed device **112** comprises a first reel **118** from which said strip of laminar element **4** is unwound and a second reel **119** on which said strip is wound after use, said first and second reels **118** and **119** being defined on the plant **100** so that the strip constituting the laminar element **4** is interposed between the laminar support **1** and the embossed surface **107,** when the thrust assembly **108** exerts the aforesaid thrust of the same embossed surface **107** against the second covering layer **3.**

In particular, the second reel **119** is arranged downstream of a treatment assembly **113,** shortly described, so as to detach the laminar element **4** from the laminar support **1** and wind it on said second reel **119** after the polymerization and stabilization step of the first covering layer **2,** and then after obtaining a stabilized covering layer **5.**

As already mentioned, subsequently the embossed surface **107,** arranged downstream of the first drying assembly **104** according to the advancement direction **X,** is pushed against the first covering layer **2,** with interposition of the laminar element **4,** in a thrust assembly **108,** as schematically represented in fig. 1(d).

During the aforesaid thrust operation, the pattern of the embossed surface **107** is imprinted on the first covering layer **2,** as schematically represented in fig. 1(e). Preferably, the aforesaid thrust is performed with a pressure comprised between 20 and 100 kg/cm² and, even more preferably, comprised between 50 and 70 kg/cm². Advantageously, the aforesaid pressure is sufficiently limited so as not to substantially alter the properties of the laminar support **1,** in particular its softness, which is very important in case the laminar support is made of leather.

Preferably and as can again be seen in fig. 3, the embossed surface **107** belongs to an embossing cylinder **109,** mounted rotatably around its axis. Advantageously, the aforesaid embossing cylinder **109** can be kept constantly resting on the laminar support **1** allowing a continuous process to be carried out. It is also evident that, in embodiment variants of the invention not represented in the figures, the embossed surface **107** may belong to a device other than the aforesaid embossing cylinder **109,** such as for example a die, or whatever.

Preferably, the embossing cylinder **109** is made of steel and has a chromed surface, which gives it high chemical resistance.

Even more in detail, said embossed surface **107** of the embossing cylinder **109** has a roughness comprised between 3 µm and 400 µm.

Still preferably, there is a support surface opposite the embossed surface **107** which, during pushing, supports the laminar support **1** on the face opposite the first face **1a**. Preferably, said support surface belongs to a corresponding support cylinder **110,** mounted rotatably around its axis.

Preferably, the embossing cylinder **109** and the support cylinder **110** are arranged at a reciprocal distance less than the overall thickness of the laminar support **1** and the first covering layer **2,** so that the latter are compressed as a result of their passage between the two cylinders **109, 110.**

Still preferably, there is provided an adjustment device for modifying the aforesaid distance depending on the thickness of the laminar support **1** employed and the pressure required for thrust.

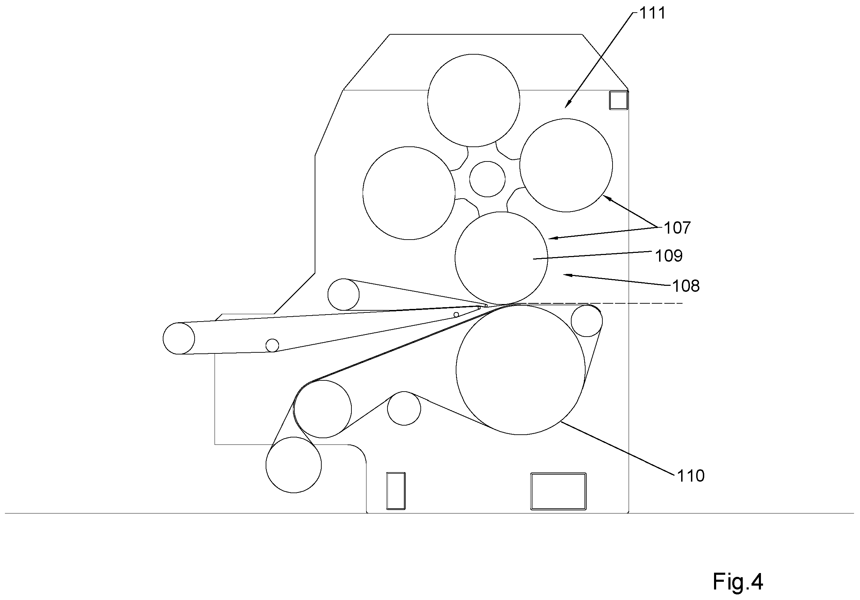

According to an embodiment variant of the invention, a plurality of interchangeable embossed surfaces **107,** in turn provided with different surface patterns, could be provided. A possible embodiment to obtain the feature just described, represented in fig. 4, envisages arranging a plurality of embossing cylinders **109,** each with a corresponding embossed surface **107,** mounted on a revolver device **111** so that they can be easily and quickly changed over if necessary. It is evident that, in embodiment variants, the number of embossing cylinders may be different from that represented in fig. 4.

As can be seen in figs. 1(d) and 1(e), following or concurrently with the thrust of the embossed surface **107** against the laminar support **1,** a treatment assembly **113** causes the polymerization and stabilization of the first covering layer **2,** so as to obtain a stabilized covering layer **5,** i.e. substantially solidified, as indicated in fig. 1(f).

Preferably, the polymerization takes place by a sequential combination of heating and cooling.

In particular, this combination of treatment steps provides for heating the embossed surface **107** to a temperature comprised between 60 °C and 190 °C, even more preferably between 70 °C and 120 °C, specifically to a temperature of 90 °C. To this end, the embossed surface **107** is associated with a heating device that can comprise, for example, a cavity in contact with the embossed surface **107** and a circulation device that conveys a heat transfer fluid into the cavity.

Preferably, the polymerization and stabilization are further carried out in a drying chamber **114** arranged downstream of the thrust assembly **108** according to the advancement direction **X,** as can be seen both in fig. 1(e), with regard to the method, and in fig. 3 with regard to the plant **100.**

Even more preferably, said drying chamber **114,** according to the method of the invention, is brought to an operating temperature comprised between 35 °C and 75 °C, even more preferably between 40 °C and 50 °C.

Preferably but not necessarily, said drying chamber **114** is an infrared or diathermic oil steam or electric furnace.

Finally, the method of the invention provides for a cooling chamber **115** arranged downstream of the drying chamber **114** according to the advancement direction **X,** as can be seen both in fig. 1(f), with regard to the method, and in fig. 3 with regard to the plant **100.**

In this case the laminar support **1** in the cooling chamber **115,** according to the method of the invention, is brought to a temperature comprised between 15 °C and 45 °C, even more preferably between 24 °C and 35 °C.

Advantageously, the presence of the aforesaid cooling chamber **115** allows the temperature of the laminar support **1** to be lowered quickly and with absolute precision depending on the type of leathers treated, regardless of the season and the location where the plant is located. In fact, without this cooling chamber **115** it would not be possible to precisely and quickly control the final temperature of the laminar support **1,** especially in those environments where the ambient temperature never reaches a temperature above 15 °C or where the ambient temperature never drops below 25 °C.

In general, advantageously, the Applicant, by means of experimental tests, has observed that such a combination in sequence of treatment steps allows to obtain a grain of the final multilayer laminar product **6,** represented in fig. 1(g), more incised and stable. In fact, the polymerization by means of this sequence of treatment steps is accelerated, obtaining a more stable final product immediately at the conclusion of the treatment method. This advantageously allows many leathers to be stacked on top of each other without sticking, immediately at the end of the production method.

Furthermore, this sequence of treatment steps, despite providing a cooling chamber **115** downstream of the drying chamber **114,** allows to reduce the size of these chambers, compared to the plants of the prior art, thus allowing to realize a plant **100** more compact than the plants of the prior art. Furthermore, still advantageously, this sequence of treatment steps allows to speed up the execution times of the entire production method of the invention with respect to known methods.

A second preferred embodiment of the method of the invention, the steps of which are schematically represented in fig. 2, could provide, with respect to the method according to the first preferred embodiment, that following the aforesaid step of consolidating the first covering layer **2** and before the step of arranging the laminar element **4,** for a further step of covering the first face **1a** of the laminar support **1,** as can be seen in fig. 2(c), above the aforesaid first covering layer **2** that has partially consolidated, with a second covering layer **3** in a water-based or solvent-based polymeric resin, preferably polyurethane or acrylic, compatible with the first covering layer **2.** Preferably but not necessarily, said second covering layer **3** is composed of a liquid or viscous substance comprising one or more polymers selected from polyurethane, acrylic, silicone, ETFE, FEP, PTFE and PEEK polymers.

Alternatively, said second covering layer **3** could be composed of water-based or solvent-based microcellulose.

It is moreover evident that, in embodiment variants of the invention, any other material can be used as the second covering layer **3,** as long as it is compatible with the first covering layer **2.**

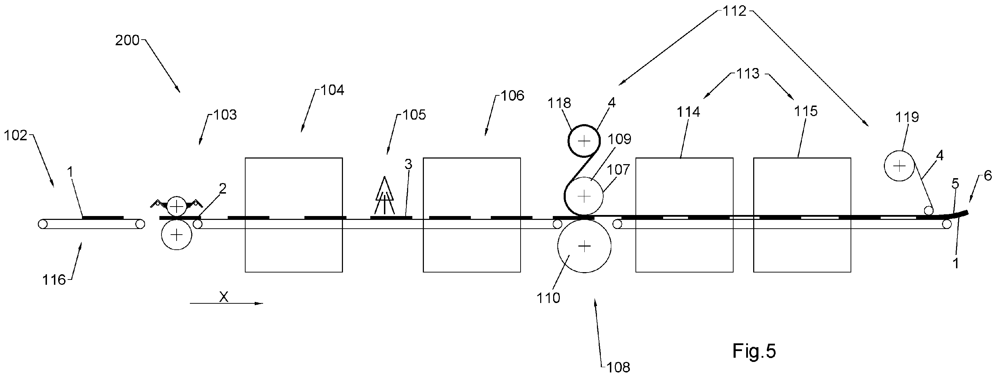

Also with regard to the second covering layer **3,** it is deposited on the laminar support **1,** preferably by spraying or by spreading with a blade or a cylinder with synchronous or reverse functionalities on the first face **1a,** as schematically represented in fig. 2(c), through a second applicator assembly **105** belonging to the plant **200** presented in fig. 5.

The second applicator assembly **105** may comprise a series of spray nozzles arranged in a circle, which are rotated around the axis of the circle so as to intersect in succession the trajectory of the laminar support **1,** or which are moved with reciprocal motion and transversely to the trajectory of the laminar support **1.** Alternatively or in combination with the aforesaid spray nozzles, the second applicator assembly **105** may comprise a doctor blade or a roller spreading machine for spreading the polymeric resin on the first face **1a,** above the first covering layer **2.**

Preferably, the amount of the second covering layer **3** is comprised between 1 and 20 grams per square foot and, even more preferably, is substantially comprised between 3 and 10 grams per square foot.

Subsequent to said second covering, as can be seen in fig. 2(d), the method of the invention also envisages consolidating the second covering layer **3,** for example causing a slight polymerization thereof, to give it a more compact consistency, similar to a gel, so as to obtain a consolidated covering layer.

Preferably, also in this case, the consolidation takes place by drying with a second drying assembly **106,** for example a battery of infrared lamps or a ventilated dryer with diathermic oil, steam or gas heating.

This consolidation step also provides for reducing the weight per square foot of the second covering layer **3** downstream of the second drying assembly **106** by a percentage comprised between 40% and 95%, preferably between 60% and 80%, with respect to the weight per square foot of said second covering layer **3** upstream of the second drying assembly **106.**

An embodiment variant of the method of the invention with respect to the second embodiment discussed so far could envisage performing all the steps described above, in particular in sequence the steps of covering the laminar support **1** with the first covering layer **2,** the step of partial consolidation of the latter, the further step of covering with the second covering layer **3** and the step of partial consolidation of the latter, omitting however the step of arranging the protective laminar element **4,** above the aforesaid second covering layer **3.**

This results in that the embossed surface **107** is adapted to come into direct contact with the second covering layer **3** during the pressing step.

Advantageously, the fact that the embossed surface **107** is defined directly on the pressing cylinder **109** and that between this embossed surface **107** and the first and second covering layers **2** and **3** there is therefore no need to interpose any other element, such as the embossed paper, it avoids having the width constraints of the latter.

In general, therefore, it is understood that the method of the invention, both in the variant of fig. 1, and in the plant **100** of fig. 3, in which the interposition of the laminar element **4** is provided, both in the variant of fig. 2, and in the plant **200** of fig. 5, in which the direct contact of the embossed surface **107** with the second covering layer **3** consisting of a non-stick lacquer is provided, achieves the purpose of allowing the processing of laminar supports **1** of any width.

Furthermore, the fact of not using any material to be interposed between the embossed surface **107** and the second covering layer **3** or, at least, the possibility of using a low-cost material for the laminar element **4** entail the further advantage of making the application of the method of the invention and the related plant configured to implement the aforesaid method cost-effective.

In particular, the use of the aforesaid low-cost smooth laminar element **4,** compared to the use of paper with an embossed surface, has the advantage of being able to eliminate the same laminar element **4** after use, without having to recover it for later use. This allows the laminar element **4** to be sized to withstand a single processing step and, therefore, allows its thickness to be minimized so as to further limit its cost and increase the processing quality.

The fact of not needing to reuse the laminar element **4** also avoids cleaning the latter, limiting the cost and overall size of the plant compared to plants of known type.

Operationally, according to the first preferred embodiment of the method of the invention, the laminar support **1** is spread on the flexible element of the first feed device **102** at a loading zone **116,** indicated in fig. 3.

The first feed device **102** thus advances the laminar support **1** according to the advancement direction **X** and at a predefined advancement speed towards the first applicator assembly **103,** where said laminar support **1** is covered with the first covering layer **2.**

The laminar support **1** thus covered is dried by the first drying assembly **104** in order to consolidate the covering layer **2.**

After this first drying operation, the laminar element **4** is arranged above the first covering layer **2,** so that the laminar support **1** covered by the same first covering layer **2** is conveyed between the embossing cylinder **109** and the support cylinder **110,** with interposition of the aforesaid laminar element **4.** During this conveyance, the embossed surface **107** is brought into contact with the first covering layer **2,** with interposition of the laminar element **4,** so as to imprint the embossing on the same first covering layer **2.**

The contact angle between the laminar support **1** and the embossing cylinder **109** may vary depending on the diameter of the embossing cylinder **109,** the production speed and the thickness of the first covering layer **2,** so as to consolidate the embossing of the latter.

The contact with the surface of the embossing cylinder **109** also allows to exploit this suitably heated surface to promote the deformation of the laminar element **4** and to start the polymerization of the first covering layer **2.**

Preferably, the contact angle between the laminar support **1** and the embossing cylinder **109** is adjustable as required by means of a special adjustment device which, for example, acts by changing the position of the support cylinder **110** according to the advancement direction **X.** The variation of the aforesaid contact angle entails the variation of the contact time between the laminar support **1** and the embossing cylinder **109.**

Preferably, the polymerization is completed in the drying chamber **114** arranged downstream of the thrust assembly **108** and in the cooling chamber **115** arranged downstream of the aforesaid drying chamber **114.**

Finally, at the exit of the aforesaid cooling chamber **115** it is possible to unload the multilayer laminar product **6** from an unloading zone **117.**

With regard, however, to the second preferred embodiment of the invention, operatively, the laminar support **1** is spread on the flexible element of the first feed device **102** at a loading area **116,** indicated in fig. 5.

The first feed device **102** thus advances the laminar support **1** according to the advancement direction **X** and at a predefined advancement speed towards the first applicator assembly **103,** where it is covered with the first covering layer **2.** The laminar support **1** thus covered is dried by the first drying assembly **104** in order to consolidate the covering layer **2.**

Subsequently, the first feed device **102** advances the laminar support **1,** whose first surface **1a** is covered with the aforesaid first covering layer **2,** according to the advancement direction **X** towards the second applicator assembly **105,** where it is covered with the second covering layer **3.**

The laminar support **1** thus covered with the second covering layer **3** is further dried by the second drying assembly **106,** in order to consolidate the second covering layer **3.**

After this second drying operation, the laminar element **4** is arranged above the second covering layer **3,** so that the laminar support **1** covered by the first covering layer **2** and the second covering layer **3** is conveyed between the embossing cylinder **109** and the support cylinder **110,** with interposition of the aforesaid laminar element **4.**

While it is conveyed, the embossed surface **107** is brought into contact with the second covering layer **3,** with interposition of the laminar element **4,** so as to imprint the embossing both on the latter and on the first covering layer **2** below. The contact angle between the laminar support **1** and the embossing cylinder **109** may vary depending on the diameter of the embossing cylinder **109,** the production speed and the thickness of the two covering layers **2** and **3,** so as to consolidate the embossing of the latter.

The contact with the surface of the embossing cylinder **109** also makes it possible to exploit this suitably heated surface to start the polymerization of the same two covering layers **2** and **3.**

Preferably, the contact angle between the laminar support **1** and the embossing cylinder **109** is adjustable as required by means of a special adjustment device which, for example, acts by changing the position of the support cylinder **110** according to the advancement direction **X.** The variation of the aforesaid contact angle entails the variation of the contact time between the laminar support **1** and the embossing cylinder **109.**

The polymerization is completed in the drying chamber **114** arranged downstream of the thrust assembly **108** and in the cooling chamber **115** arranged downstream of the aforesaid drying chamber **114.**

Preferably, during polymerization the second covering layer **3** adheres to the first covering layer **2** giving rise to a stabilized layer **5** in a single body, indicated in fig. 2(i).

Finally, at the exit of the aforesaid cooling chamber **115** it is possible to unload the multilayer laminar product **6** from an unloading zone **117.**

From what has been said so far, it is understood that the method and the plant described above achieve all the intended objects.

In particular, the fact of using an embossed surface directly in contact with the layer to be embossed or, at least, distinct from a possible laminar element allows the entire process to be disconnected from the embossed papers available on the market, which constrain the maximum width of the processable laminar supports.

As a result, it is possible to realize a plant capable of processing laminar supports with widths greater than those permitted by the known technique.

Furthermore, the aim of proposing a method for producing a multilayer laminar product, the implementation of which is less expensive than similar methods belonging to the prior art, is also achieved.

The aim of proposing a production method that allows to obtain a more stable and resistant final product is also achieved.

Finally, the aim of proposing a production method that allows to realize more compact production plants compared to plants of known type is also achieved.

## Claims

1. Method for producing a multilayer laminar product (6), comprising the following operations:
- arranging a laminar support (1), said laminar support (1) being a leather and/or a fabric;
- advancing said laminar support (1) in a plant (100) according to an advancement direction (X) at a predefined advancement speed from a first feed device (102);
said method providing, during said advancement, to perform in sequence the operations of:
- covering a first face (1a) of said laminar support (1) with a first covering layer (2) in a polymeric resin, said covering operation providing for covering said first face (1a) with an amount of said first covering layer (2) comprised between 2 and 20 grams per square foot, more preferably said amount being comprised between 7 and 12 grams per square foot, said covering operation being performed through a first applicator assembly (103) belonging to said plant (100);
- consolidating, at least partially, said first covering layer (2), said consolidation step taking place by drying with a first drying assembly (104) belonging to said plant (100) so as to reduce the amount of water or solvent per square foot of said first covering layer (2) downstream of said consolidation by a percentage comprised between 40% and 95%, preferably between 60% and 80%, with respect to the weight per square foot of said first covering layer (2) upstream of said consolidation;
- pushing an embossed surface (107) belonging to a thrust assembly (108) of said plant (100) against said first covering layer (2) to imprint on said first covering layer (2) the pattern of said embossed surface (107);
- after imprinting said pattern, causing the polymerization of said first covering layer (2) to produce a stabilized covering layer (5);
**characterized in that,** during said step of pushing said embossed surface (107) against said first covering layer (2), said embossed surface (107) has a temperature comprised between 60 °C and 190 °C, even more preferably between 70 °C and 120 °C, specifically a temperature of 90 °C, to initiate the polymerization of said first covering layer (2), said method providing that said step of polymerization and stabilization, subsequent to said imprinting of said pattern, provides in sequence to bring said first covering layer (2), by means of a drying chamber (114) belonging to said plant (100), to a temperature comprised between 40 °C and 50°C, and subsequently bringing said first covering layer (2), by means of a cooling chamber (115) belonging to said plant (100) and arranged downstream of said drying chamber (114), to a temperature comprised between 24 °C and 35 °C, said method providing for discharging said multilayer laminar product (6) from a discharge zone (117) belonging to said plant (100) exiting from said cooling chamber (115).

2. Method according to claim 1, **characterized in that** between said consolidation step and said pushing step it is provided to arrange a laminar element (4) above said first covering layer (2), said laminar element (4) being of a material selected from polyethylene, nylon or polyester with thickness comprised between 5 µm and 50 µm, even more preferably between 8 µm and 25 µm, specifically with thickness between 9 µm and 18 µm, said laminar element (4) having a smooth surface, said laminar element (4) also being free of any covering film at its surface adapted to face said first covering layer (2), said pushing step providing to push said embossed surface (107) against said first covering layer (2) with interposition of said laminar element (4).

3. Method according to any one of the preceding claims, **characterized by** providing, after said consolidation operation of said first covering layer (2) and before said arrangement of said laminar element (4), for the execution of the following operations:
- covering said first face (1a) of said laminar support (1), above said first covering layer (2) at least partially consolidated, with a second covering layer (3) in a water-based or solvent-based polymeric resin, preferably polyurethane or acrylic, compatible with said first covering layer (2);
- consolidating, at least partially, said second covering layer (3) before pushing said embossed surface (107) against said second covering layer (3).

4. Method according to claim 3, **characterized in that** said second covering layer (3) is composed of a liquid or viscous substance comprising one or more polymers selected from polyurethane, acrylic, silicone, ETFE, FEP, PTFE and PEEK polymers.

5. Method according to any one of claims 3 or 4, **characterized in that** the amount of said second covering layer (3) is comprised between 1 and 20 grams per square foot, more preferably said amount being comprised between 3 and 10 grams per square foot.

6. Method according to any one of the preceding claims, **characterized in that** said embossed surface (107) belongs to an embossing cylinder (109).

7. Method according to any one of the preceding claims, **characterized in that** said laminar support (1) comprises a leather and/or a fabric.

8. Plant (100, 200) for producing a multilayer laminar product (6), comprising in sequence, according to an advancement direction (X):
- a first feed device (102) for advancing a laminar support (1) at a predetermined advancement speed;
- a first applicator assembly (103) for covering a first face (1a) of said laminar support (1) with a first covering layer (2) in a polymeric resin, said first applicator assembly (103) being configured to cover said first face (1a) with an amount of said first covering layer (2) comprised between 2 and 20 grams per square foot, more preferably said amount being comprised between 7 and 12 grams per square foot;
- a first drying assembly (104) configured to consolidate, at least partially, said first covering layer (2), said first drying assembly (104) being configured to dry said first covering layer (2) so as to reduce the amount of water or solvent per square foot of said first covering layer (2) downstream of said consolidation by a percentage comprised between 40% and 95%, preferably between 60% and 80%, with respect to the weight per square foot of said first covering layer (2) upstream of said consolidation;
- a thrust assembly (108) comprising an embossed surface (107) arranged downstream of said first drying assembly (104), configured to push said embossed surface (107) against said first covering layer (2), so as to imprint on said first covering layer (2) the pattern of said embossed surface (107);
- a treatment assembly (113) arranged downstream of said thrust assembly (108), configured to cause the polymerization of said first covering layer (2);
**characterized in that** said treatment assembly (113) comprises in sequence:
- a drying chamber (114) arranged downstream of said thrust assembly (108) according to said advancement direction (X), said drying chamber (114) being configured to be brought to an operating temperature comprised between 40 °C and 50 °C;
- cooling chamber (115) arranged downstream of said drying chamber (114) according to said advancement direction (X), said cooling chamber (115) being configured to be brought to a temperature comprised between 24 °C and 35 °C;
- an unloading zone (117) configured to allow unloading said multilayer laminar product (6) exiting from said cooling chamber (115).

9. Plant (200) for producing a multilayer laminar product (6), according to claim 8, **characterized in that** it comprises:
- downstream of said first drying assembly (104), a second applicator assembly (105) for covering said first face (1a) of said laminar support (1), above said first covering layer (2) at least partially consolidated, with a second covering layer (3) in a water-based or solvent-based polymeric resin, preferably polyurethane or acrylic, compatible with said first covering layer (2);
- a second drying assembly (106) configured to consolidate, at least partially, said second covering layer (3).

10. Plant (100, 200) according to any one of claims 8 or 9, **characterized in that** it comprises a second feed device (112) for the advancement of a laminar element (4) at a speed corresponding to said advancement speed, said second feed device (112) comprising a series of rollers configured to keep said laminar element (4) in tension and guide it according to a predefined trajectory, so as to bring it into contact with said laminar support (1), said thrust assembly (108) being configured to push said embossed surface (107) against said first covering layer (2), with interposition of said laminar element (4).

11. Plant (100, 200) according to claim 10, **characterized in that** said laminar element (4) is provided in the form of a strip, said second feed device (112) comprising a first reel (118) from which said strip of said laminar element (4) is unwound and a second reel (119) on which said strip of said laminar element (4) is wound, said first reel (118) and said second reel (119) being arranged in said plant (100, 200) so that said strip of said laminar element (4) is interposed between said laminar support (1) and said embossed surface (107) when said thrust assembly (108) exerts said thrust of said embossed surface (107) against said second covering layer (3) applied on said laminar support (1).

12. Plant (100, 200) according to claim 11, **characterized in that** said second reel (119) is arranged downstream of said treatment assembly (113) so as to detach said laminar element (4) from said laminar support (1) and wind it on said second reel (119) after the polymerization and stabilization step of said first covering layer (2).

13. Plant (100, 200) according to any one of claims 8 to 12, **characterized in that** said embossed surface (107) belongs to an embossing cylinder (109).
